# EUROPÄISCHE PATENTSCHRIFT

(11) **EP 1 248 003 B1**
(45) Veröffentlichungstag und Bekanntmachung des Hinweises auf die Patenterteilung: **07.09.2005**
(21) Anmeldenummer: 02007269.0
(22) Anmeldetag: 28.03.2002
(51) Int. Cl.: F16B 25/00

(54) **Gewindeformschraube**
Thread forming screw
Vis autotaraudeuse

(30) Priorität: 06.04.2001 DE 10117171
(43) Veröffentlichungstag der Anmeldung: 09.10.2002
(73) Patentinhaber: ITW Automotive Products GmbH & Co. KG, 58636 Iserlohn (DE)
(72) Erfinder: Isenberg, Rainer, 58642 Iserlohn (DE)
(74) Vertreter: Hauck, Graalfs, Wehnert, Döring, Siemons

(56) Entgegenhaltungen:
- WO-A-98/13606
- US-A- 2 856 617
- US-A- 6 142 186
- US-A- 6 158 938

## Beschreibung

Die Erfindung bezieht sich auf eine Baueinheit mit einem Werkstück und einer Gewindeformschraube nach dem Oberbegriff des Patentanspruchs 1.

Gewindeformschrauben sind bekanntlich Schrauben, welche mit dem eigenen Gewinde ein Mutterngewinde in der Bohrung eines Werkstücks erzeugen. Man unterscheidet hierbei ein selbstschneidendes und ein selbstformendes Gewinde der Schraube. Beim selbstschneidenden Gewinde wird in einem vorgebohrten Kernloch durch spangebende Verformung das Mutterngewinde erzeugt. Beim selbstformenden Gewinde findet die Erzeugung des Mutterngewindes weitgehend spanlos durch plastische Verformung des Werkstücks statt. In diesem Zusammenhang ist bekannt, selbstformenden Gewindeschrauben eine Gewindeformzone zuzuordnen, mit deren Hilfe auf besonders wirksame Weise das Mutterngewinde hergestellt werden kann. Bei Werkstücken aus Kunststoff wird das vorgefertigte Loch oder die vorgefertigte Bohrung normalerweise nicht mit dem Kerndurchmesser der Gewindeformschraube versehen, sondern mit einem größeren Durchmesser, vorzugsweise mit dem Flankendurchmesser der Formschraube.

Zur besseren Einführung der Gewindeformschraube in die vorgefertigte Bohrung ist die Formschraube üblicherweise am Ende mit einem Gewindeanschnitt versehen bzw. einem konischen Abschnitt, wodurch eine Zentrierung in der Bohrung erreicht wird und ein leichteres Einlaufen der Gewindegänge des Gewindeformabschnitts in die Bohrungswandung.

Aus US 6,142,186 ist eine Gewindeformschraube bekannt geworden, die als dichtender Verschluß für ein Rohr ausgebildet ist. Das Rohr weist einen zum Ende hin sich konisch erweiternden Abschnitt auf, und der gewindeformende Schaft der Schraube ist vom Schraubenkopf fort gerichtet konisch verjüngt. Am dem Kopf gegenüberliegenden Ende ist ein kugelförmiger oder ansonsten balliger Abschnitt vorgesehen, der in dichtenden Eingriff mit der Wandung des konischen Abschnitts gelangt. Der Außendurchmesser des balligen Abschnitts oder mehrerer balliger Ringe ist derart, daß der ballige Abschnitt ohne weiteres durch den Innengewindeabschnitt des Rohres herausgezogen werden kann, wenn die Öffnung des Rohres freigegeben werden soll.

Aus WO 98/13606 und US 6,158,938 ist bekannt geworden, eine Gewindeschraube am Einführende mit einem kugelförmigen Abschnitt zu versehen. Der größte Durchmesser des kugelförmigen Abschnitts ist kleiner als der kleinste Durchmesser des Innengewindeabschnitts, in welche der Gewindeschaft der Schraube eingeschraubt werden soll. Der kugelförmige Abschnitt dient als Führung beim Einführen des Gewindeschafts in das Innengewinde, z.B. einer Mutter oder dergleichen.

Auch bei Schraubverbindungen mit Gewindeformschrauben besteht die Gefahr des unfreiwilligen Lösens, etwa durch Erschütterungen. Vielfach werden Gewindeformschrauben mit entsprechenden Werkstücken, beispielsweise aus Kunststoff, vormontiert. Hierbei wird die Gewindeformschraube teilweise in die Bohrung des Werkstücks eingedreht. Beim Transport derartiger vorgeformter Einheiten treten naturgemäß Erschütterungen auf, die dazu führen können, daß sich die Schrauben von den Werkstücken lösen. Es ist bekannt, hierfür entsprechende Vorkehrungen zu treffen, beispielsweise durch eine Mikroverkapselung des Gewindes. Die Mikroverkapselung erzeugt eine erhöhte Reibung und damit eine Sicherheit gegen unerwünschtes Lösen der Schraube in der Bohrung. Die Mikroverkapselung ist jedoch verhältnismäßig aufwendig.

Der Erfindung liegt die Aufgabe zugrunde, eine Baueinheit aus einem Werkstück und einer Gewindeformschraube zu schaffen, wobei die Gewindeformschraube sowohl im vormontierten als auch im fertigen Einsatzzustand eine größtmögliche Sicherheit gegenüber einem unfreiwilligen Lösen aufweist.

Diese Aufgabe wird durch die Merkmale des Patentanspruchs 1 gelöst.

Bei der erfindungsgemäßen Baueinheit weist der Schaft der Gewindeformschraube an dem dem Kopf abgewandten Ende einen kugelförmigen Abschnitt auf, dessen maximaler Durchmesser in der Ebene senkrecht zur Achse des Schaftes annähernd dem Flankendurchmesser des Schaftgewindes entspricht.

Der kugelförmige Abschnitt kann ein Kugelabschnitt sein. Nach einer weiteren Ausgestaltung der Erfindung ist der Durchmesser des Kugelabschnitts angrenzend an die Gewindeformzone dem Durchmesser der Gewindeformzone an dieser Stelle gleich. Dabei kann der gesamte ballige Abschnitt angrenzend an die Gewindeformzone als Kugelabschnitt ausgeführt sein.

Bei der Vormontage aus Gewindeformschraube und einem Werkstück, das aus einem Werkstoff besteht, der zur Gewindeformung geeignet ist, beispielsweise aus Kunststoff, ist der Durchmesser der Bohrung annähernd gleich dem Flankendurchmesser ist.

Bei Einsetzen der erfindungsgemäßen Formschraube in das Werkstück dient der ballige Ansatz der Zentrierung des Schraubenschaftes. Anschließend formt der Gewindeformabschnitt in der Bohrungswandung sein Gewinde. Ist der maximale Durchmesser des kugelförmigen Abschnitts annähernd gleich dem Durchmesser der Bohrung, trifft er beim Einformen des Gewindes auf keinen nennenswerten Widerstand. Unabhängig von dem Ausmaß des Eindrehens des Gewindeschaftes in die Bohrung ist bei der erfindungsgemäßen Gewindeformschraube zu jeder Zeit eine Sicherung gegeben. Die Sicherung in Einschraubrichtung findet über den noch nicht mit einem Gewinde versehenen Bohrungsabschnitt statt. Die Sicherung in der entgegengesetzten Richtung findet durch den balligen Abschnitt statt. Wird nämlich versucht, die Gewindeformschraube aus der Bohrung herauszudrehen, kann dies nur stattfinden, wenn das bereits in der Bohrungswandung geformte Gewinde zerstört wird. Hierzu ist jedoch eine nicht unerhebliche Kraft erforderlich, die normalerweise bei Erschütterungen nicht erzeugt wird.

Auch wenn die Schraube vollständig eingeschraubt ist, so daß der ballige Abschnitt aus der Bohrung des Werkstücks hervorragt, findet eine Sicherung der Schraube statt. Eine Sicherung gegen ein minimales Lösen wird jedoch nur erreicht, wenn zwischen der entsprechenden Seite des Werkstücks und dem balligen Abschnitt im wesentlichen kein nennenswerter Abstand vorhanden ist.

Die Herstellung der erfindungsgemäßen Schraube kann wie die einer herkömmlichen handelsüblichen Schraube erfolgen. Zunächst wird ein Rohling ohne Gewinde in einer Schraubenpresse hergestellt, und zwar mit einem balligen oder kugelförmigen Ansatz. Anschließend wird das Gewinde gewalzt, sowie der kugelige Abschnitt in die gewünschte Form gewalzt. Das Formwalzen des balligen oder kugelförmigen Abschnitts kann in einem Arbeitsgang mit dem Gewindewalzen erfolgen, wobei hierfür eine spezielle Walzbacke erforderlich ist.

Die Erfindung wird nachfolgend anhand von Zeichnungen näher erläutert.
- Fig. 1: zeigt eine erfindungsgemäße Gewindeformschraube außerhalb eines Werkstücks.
- Fig. 2: zeigt die Gewindeformschraube nach Fig. 1 nach teilweisem Einschrauben in ein Werkstück.
- Fig. 3: zeigt die komplette Verschraubung der erfindungsgemäßen Formschraube in dem Werkstück.
- Fig. 4a - d: zeigen die Herstellung eines Schraubenrohlings aus einem Ausgangsmaterial.

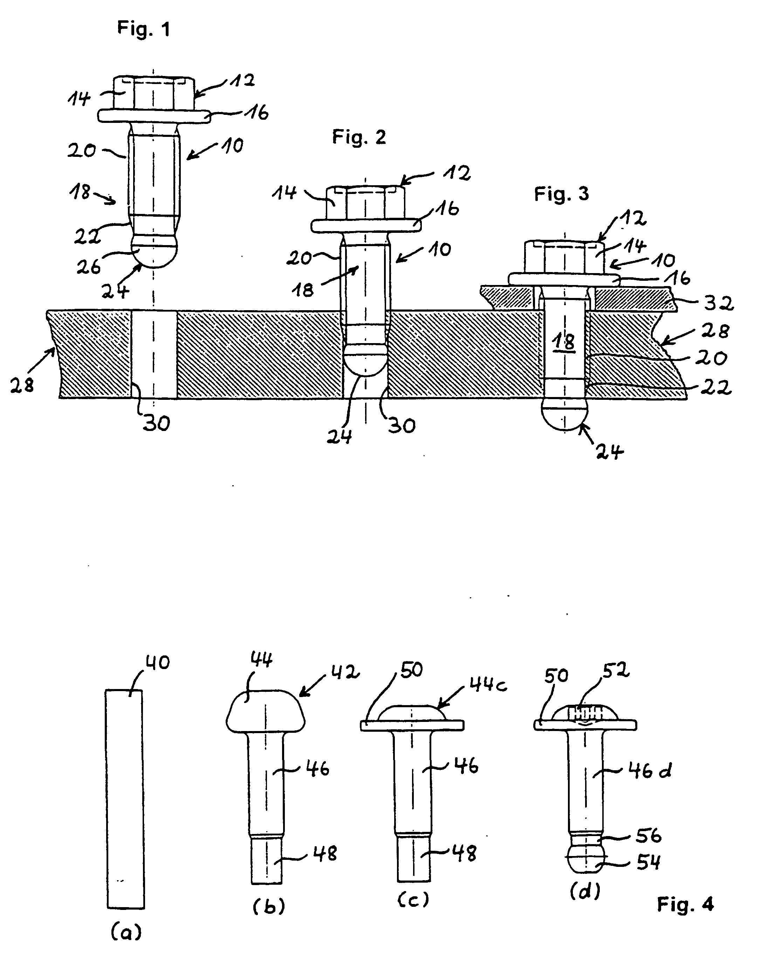

In den Fig. 1 bis 3 ist eine Gewindeformschraube 10 dargestellt. Sie weist einen Kopf 12 auf mit einem Sechskant 14 und einem sich anschließenden Flansch 16. Die Schraube 10 weist ferner einen Schaft 18 auf, der mit einem Gewinde 20 versehen ist. Im Endbereich ist das Gewinde 20 als Gewindeformzone ausgebildet mit einem konischen Abschnitt 22. An den Abschnitt 22 schließt sich ein kugelförmiger Abschnitt 24 an. Der Durchmesser des kugelförmigen Abschnitts 24 unmittelbar an den konischen Abschnitt 22 angrenzend entspricht dem Durchmesser des konischen Abschnitt 22 an dieser Stelle. Der maximale Durchmesser des Kugelabschnitt 24, bei 26 dargestellt, entspricht dem Flankendurchmesser des Gewindes 20.

In den Fig. 1 bis 3 ist auch ein Werkstück 28 aus Kunststoffmaterial gezeigt. Es besitzt eine Durchbohrung 30, wobei der Durchmesser der Durchbohrung 30 dem Flankendurchmesser des Gewindes 20 entspricht.

Bei der Darstellung nach Fig. 2 ist gezeigt, wie die Gewindeformschraube 10 teilweise in die Bohrung 30 eingeschraubt ist. Mit Hilfe der Gewindeformzone (nicht im einzelnen gezeigt) wird in die Wandung der Bohrung 30 ein Gewinde, ein sogenanntes Mutterngewinde, eingeformt. Entsprechend ändert sich die Geometrie der Bohrung 30. Da der kugelförmige Abschnitt 24 dem Durchmesser der Bohrung 30 entspricht, kann er weitgehend frei die Bohrung 30 passieren. Würde jetzt aufgrund von Erschütterungen eine Lösekraft auf die Schraube 10 ausgeübt werden in Richtung eines Herausdrehens aus der Bohrung 30, wird dies von dem kugelförmigen Abschnitt 24 verhindert. Ein Rückdrehen der Schraube würde nämlich auf einen erheblichen Widerstand stoßen, da der kugelförmige Abschnitt 24 das bereits geformte Gewinde verformen bzw. zerstören müßte. Dies ist nur mit einem erheblichen Kraftaufwand möglich.

Im fertig eingeschraubten Zustand klemmt der Schraubenkopf 12 über seinen Flansch 16 eine Platte 32 gegen das Werkstück 28. Der kugelförmige Abschnitt 24 ragt aus der Bohrung 30 heraus, und zwar über seine gesamte Höhe. Mit anderen Worten, der Anschnitt 22 endet in Höhe der unteren Fläche des Werkstücks 28. Auch hier wird in gleicher Weise, wie oben geschildert, eine Sicherung der Schraube 10 erhalten.

In den Fig. 4 a bis 4d ist die Teilfertigung der Schraube 10 wiedergegeben. Ein stangenförmiger Rohling 40 wird zu einem ersten Vorformling 42 gepreßt oder gewalzt, mit einem Kopf 44 und einem Schaft mit einem ersten Schaftabschnitt 46 und einem im Durchmesser verringerten Schaftabschnitt 48. Im nächsten Schritt wird der Kopf 44 zu einem Kopf 44c verformt, der einen Flansch 50 aufweist und versenkte Schlüsselflächen 52, wie in Fig. d gezeigt. Durch eine weitere Verformung wird der Schaftabschnitt 46 zu einem Schaftabschnitt 46d und aus dem Schaftabschnitt 48 ein kugelförmiger Ansatz 54 geformt, wobei zwischen Schaftabschnitt 46d und kugelförmigem Ansatz 54 ein eingeschnürter Abschnitt 56 von kleinerem Durchmesser geformt wird. Durch anschließendes Gewindeformen wird eine Gewindeformschraube hergestellt, wie sie in den Fig. 1 bis 3 gezeigt ist, bei der im Vergleich zu den Fign. 1 bis 3 ein Unterschied im Hinblick auf die Formgebung des Kopfes zu erkennen ist. Im Hinblick auf den Schaft 18 bzw. den kugelförmigen Abschnitt besteht jedoch Übereinstimmung.

## Patentansprüche

1. Baueinheit mit einem Werkstück und einer Gewindeformschraube, die in eine Bohrung (30) eines Werkstücks (28) eingeschraubt ist, mit einem Kopf (12) und einem Schaft (18), wobei der Schaft (18) ein Gewinde (20) mit einer Gewindeformzone (22) an dem dem Kopf abgewandten Ende des Schaftes (18) aufweist, die ihrerseits einen Gewindeabschnitt aufweist zur Formung eines Mutterngewindes in der Bohrung (30), wobei der Schaft (18) an dem dem Kopf (12) entgegengesetzten Ende einen kugelförmigen oder kugelabschnittförmigen Abschnitt (24) aufweist, **dadurch gekennzeichnet, daß** der maximale Durchmesser (26) des kugelförmigen oder kugelabschnittförmigen Abschnitts (24) in der Ebene senkrecht zur Achse des Schaftes (18) annähernd dem Flankendurchmesser des Schaftgewindes (20) entspricht, derart, daß bei einem Herausziehen oder Herausdrehen der Gewindeformschraube aus der Bohrung (30) das Mutterngewinde zerstört wird.

2. Baueinheit nach Anspruch 1, **dadurch gekennzeichnet, daß** der Durchmesser des kugelförmigen oder kugelabschnittförmigen Abschnitts (24) angrenzend an die Gewindeformzone (22) gleich dem Durchmesser der Gewindeformzone (22) an dieser Stelle ist.

3. Baueinheit nach einem der Ansprüche 1 oder 2, **dadurch gekennzeichnet, daß** das Werkstück (28) aus nachgebendem Material besteht.

## Claims

1. Structural unit of a thread-forming screw and a workpiece, the thread forming screw being adapted to be threaded into a bore (30) of the workpiece (28) and comprising a head (12) and a shank (18), the shank having a thread and a thread-forming zone at the end opposite to the head, the thread-forming zone also having a thread portion to form a female thread in the bore (30), the shank (18) at the end opposite to the head (12) has a spherical or partially spherical portion (24), **characterized in that** the maximum diameter (26) in a plane perpendicular to the axis of the shank (18) corresponds approximately to the flank diameter of the thread (20) such that upon a withdrawal or threading unit of the bore the female thread (30) is damaged..

2. The unit of claim 1, wherein the diameter of the spherical or partially spherical portion (24) adjacent to the thread-forming zone (22) corresponds to the diameter of the thread-forming zone (22) at this location.

3. The unit of claim 1 or 2, wherein the workpiece (28) is of yieldable material.

## Revendications

1. Unité de construction avec une pièce et une vis autotaraudeuse qui est vissée dans un alésage (30) d'une pièce (28), avec une tête (12) et une tige (18), la tige (18) présentant un filet (20) avec une zone autotaraudeuse (22) sur l'extrémité de la tige (18) opposée à la tête, qui présente de son côté un tronçon de filet pour la formation d'un filet femelle dans l'alésage (30), la tige (18) présentant sur l'extrémité opposée à la tête (12) un tronçon (24) sphérique ou en forme de segment sphérique, **caractérisée en ce que** le diamètre maximal (26) du tronçon (24) sphérique ou en forme de segment sphérique correspond, dans le plan perpendiculaire à l'axe de la tige (18), approximativement au diamètre de flanc du filet de tige (20), de sorte que, lors d'une extraction ou d'un dévissage de la vis autotaraudeuse hors de l'alésage (30), le filet femelle est détruit.

2. Unité de construction selon la revendication 1,
**caractérisée en ce que** le diamètre du tronçon (24) sphérique ou en forme de segment sphérique jouxtant la zone autotaraudeuse (22) est égal au diamètre de la zone autotaraudeuse (22) à cet endroit.

3. Unité de construction selon l'une des revendications 1 ou 2, **caractérisée en ce que** la pièce (28) est constituée d'un matériau souple.
